(19) **Europäisches Patentamt / European Patent Office / Office européen des brevets**

(11) **EP 4 723 100 A1**

(12) # EUROPEAN PATENT APPLICATION

(43) Date of publication:
**08.04.2026 Bulletin 2026/15**

(21) Application number: **24205053.2**

(22) Date of filing: **07.10.2024**

(51) International Patent Classification (IPC):
**G10L 13/047** (2013.01)　　**G06N 3/045** (2023.01)

(52) Cooperative Patent Classification (CPC):
**G10L 13/047; G06N 3/045**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **03.10.2024 PT 2024119741**

(71) Applicant: **NOS Inovação, S.A.**
**4460-191 Porto (PT)**

(72) Inventors:
  • **PINTO SEQUEIRA DOS SANTOS GRAÇA, Jorge Filipe**
    **Porto (PT)**

  • **NUNES FERREIRA, João Miguel**
    **Porto (PT)**
  • **GABRIEL FERNANDES, Diana Lamy**
    **Porto (PT)**
  • **CARMEJO GARÇÃO, Telma**
    **Porto (PT)**
  • **COUTINHO DE SOUSA, Joana**
    **Porto (PT)**

(74) Representative: **do Nascimento Gomes, Rui**
    **J. Pereira da Cruz, S.A.**
    **Rua Vítor Cordon, 10-A**
    **1249-103 Lisboa (PT)**

(54) **A TRANSFORMER-BASED TEXT-TO-SPEECH SYSTEM FOR NEURAL SPEECH SYNTHESIS WITH A POST-NET UNIT COMPRISED BY A CBHG MODULE**

(57) It is described a transformer-based text-to-speech system for neural speech synthesis, which is built upon a transformer-based architecture. The system includes a post-net unit (7) that is modified, compared to a Post-net unit of a conventional TSS transformer architecture, to include a CBHG module (7.1) configured to convert mel-spectrogram frames, $M$, into linear spectrogram, $L$, followed by convolutional layers (7.2, 7.3) for refinement. $L_{refined}$. This modification allows the system to enhance speech naturalness by capturing long-term dependencies and establishing context across sequential frames of the mel-spectrogram, which improves the quality of the synthesized speech, $W$.

Figure 1

**Description**

## TECHINCAL FIELD

The present disclosure relates to artificial intelligence architectures for synthesising human speech, more particularly, it belongs to the field of voice cloning technologies.

## PRIOR ART

Voice cloning is an emerging field in artificial intelligence (AI) aimed at creating synthetic speech that closely resembles human voices. It lies at the intersection of artificial intelligence and the physics of sound.

The physics of voice production involves the generation of sound waves through the vibration of vocal cords, which are then shaped by the vocal tract to produce distinctive speech patterns. In essence, voice cloning attempts to mimic these physiological processes to synthesize speech indistinguishable from human voices using computational models.

These technologies operate through two primary methods: text-to-speech (TTS), which generates speech from textual input, and speech-to-speech (STS) or voice conversion, which modifies existing speech. Early voice synthesis techniques, like concatenative and parametric synthesis, produced unnatural speech. Concatenative synthesis pieced together pre-recorded segments, while parametric synthesis used predefined rules and functions.

The introduction of deep learning techniques then marked a significant milestone in voice cloning technologies, improving the state-of-the-art, namely with models based on convolutional neural networks and sequence-to-sequence learning with attention mechanisms.

In that context, "Tacotron" is an end-to-end speech synthesis model developed by Google that converts text into mel-spectrograms, which are visual representations of the frequency content of an audio signal over time, scaled according to the mel-scale to more closely mimic the human ear's perception of sound. These mel-spectrograms are then transformed into audio waveforms by a vocoder, which is a signal processing technique that synthesises speech or other audio signals by analysing and resynthesizing the spectral characteristics of the input sound, typically WaveNet. "Tacotron" employs Recurrent Neural Networks (RNN) to process an input text sequence and generate the corresponding mel-spectrograms, effectively modelling the sequential nature of the text and maintaining context.

"Tacotron 2", in its turn, builds upon this foundation, combining the strengths of "Tacotron" and WaveNet in a unified architecture. The improvements include better handling of prosody and reduced computational requirements, making it more practical for real-world applications.

Finally, "Transformer TTS" is a TTS model that builds upon the foundation of "Tacotron 2", incorporating the strengths of the transformer architecture for enhanced performance. Like "Tacotron 2", "Transformer TTS" converts text to mel-spectrograms, but it replaces the RNNs with self-attention mechanisms. The architecture consists of an encoder and a decoder, both with multi-head attention layers and feed-forward networks. This design allows the model to integrate global context into each input frame and to speed up training and inference, significantly improving prosody and speech quality.

Although existing solutions already provide satisfactory results, it is recognised that there is room for improvement when it comes to generating high-quality speech with natural prosody and clarity.

It is in this context that the present application falls.

## SUMMARY OF THE DISCLOSURE

The present application is directed to a transformer-based text-to-speech system for neural speech synthesis, which is built upon a transformer-based architecture.

The system may include a context-ware representation unit configure to, upon receiving at least a text prompt, $T$, generate context-aware representations, $D$, based on at least an ordered sequence of context-aware phoneme embeddings, $E_p$. A Mel Linear and Stop Linear unit converts said context-aware representations, $D$, into a mel-spectrogram, $M$, which is subsequently converted into a refined linear spectrogram, $L_{refined}$, by a post-net unit, that includes a CBHG module, and then into a speech waveform, $W$, by a reconstruction audio signal unit.

Consequently, the proposed system is similar to a Transformer TTS architecture, with a first key modification: the post-net unit includes a CBHG (Convolutional Banks + Highway Networks + Gated Recurrent Units) module that generates a linear spectrogram, $L$, followed by convolutional layers for refinement, $L_{refined}$. This modification improves the quality of the synthesized speech by enhancing speech naturalness since it allows to capture long-term dependencies and to establish context across sequential frames of the mel-spectrogram.

Additionally, in a preferred aspect of the system, it may further include a second key modification, according to which a convolutional encoder-decoder sub-module is used to generate compressed acoustic representations, $C$, instead of the mel-spectrogram, from an audio voice signal input, **A.** This modification allows to further improve the quality of the synthesized speech by capturing a more precise representation of the voice signal to be cloned.

**DETAILED DESCRIPTION**

The more general configurations of the system will be described in this section, while the description of particular configurations will be carried out in the "Embodiments" section, according to other advantageous and/or preferred embodiments of implementation of the system.

The proposed system is built upon a transformer-based architecture. By employing a transformer architecture, it is possible to achieve operational efficiency and efficacy, since, unlike traditional recurrent architectures, a transformer architecture includes parallelization capabilities, enabling faster training and inference times. Moreover, transformers excel in capturing contextual information and long-range dependencies within sequences. Additionally, the self-attention mechanisms employed in a transformer architecture also allows it to focus on relevant parts of the input sequence, enhancing the quality of synthesized speech.

The system may be based on at least one prompt input: a text prompt, **T,** which is to be converted into a sequence of phonemes, $X_0$, via grapheme-to-phoneme sub-module. Alternatively, the system may be further based on an audio prompt, **A,** which is to be encoded into an acoustic compressed representation, **C,** using a convolutional encoder-decoder sub-module. For the purposes of describing the general configurations of the system, it will be considered that the system is based on inputs **T** and **A**.

The grapheme-to-phoneme sub-module may be a tokenizer that is adapted to convert text into a sequence of phonemes. By using predefined linguistic rules and models, that depends on the language under consideration, it may derive the pronunciation of words based on their written representation.

The sequence of phonemes, $X_0$ may then be embedded by means of an encoder pre-net sub-module, in order to generate phoneme embeddings **X**. More precisely, the encoder pre-net may process the phoneme sequence $X_0$ to extract longer-term context, outputting embeddings **X**. It may consist of a 3-layer Convolutional Neural Network (CNN) with batch normalization, Rectified Linear Unit (ReLU) activation and a dropout layer after each convolutional layer. It may also have a linear projection layer at the end to ensure center consistency. In fact, the output range of ReLU is [0, ∞], while the dimension of the positional embeddings, added later on, is [-1, 1].

Given a phoneme sequence represented in a matrix $X_0 \in \mathbb{R}^{Lg \times d}$, with $Lg$ the sequence length and d the embedding dimension, the operations of the encoder pre-net sub-module may be denoted as:

$$X_1 = Conv1\left(Dropout\left(ReLU\left(BatchNorm(X_0)\right)\right)\right)$$

$$X_2 = Conv2\left(Dropout\left(ReLU\left(BatchNorm(X_1)\right)\right)\right)$$

$$X_3 = Conv3\left(Dropout\left(ReLU\left(BatchNorm(X_2)\right)\right)\right)$$

$$X = Linear(X_3) \in \mathbb{R}^{Lg \times d}$$

where $BatchNorm(Y) = \frac{Y - \mu}{\sigma} \odot \gamma + \beta$, with $\mu$ the mean of Y, $\sigma$ the standard variance of Y, $\gamma$ and $\beta$ learnable parameters, and $\odot$ denotes element-wise multiplication; $Dropout(Y) = \frac{Y \odot Mk}{1 - p}$, with $Mk$ a binary mask matrix drawn from a Bernoulli distribution with a dropout rate p = 0.5; and Linear(Y) = YW + b, with Wa learnable weight matrix and b a bias vector.

In its turn, the convolutional encoder-decoder sub-module used to generate acoustic compressed representation, **C,** from the audio prompt, **A,** may be a pre-trained model that extracts features from said raw voice signal $A \in \mathbb{R}^{Ca \times T}$, where $C_a$ is the number of audio channels, and $T = df_{sr}$ is the number of audio samples for a given sample rate $f_{sr}$, and d is the embedding dimension.

Through a series of convolutional layers and a Residual Vector Quantization (RVQ) layer it then encodes the acoustic features into a compressed representation: $C = model(A) \in \mathbb{R}^{C_c \times T'}$, where $C_c$ is the number of audio channels and $T'$ is the reduced temporal dimension.

A decoder pre-net sub-module may then process the compressed acoustic representations **C,** using a neural network composed of 2 fully connected layers with ReLu activation, and a dropout layer (p = 0.5), after each fully connected layer: $E_a = model(C) \in \mathbb{R}^{Lg \times d}$.

This sub-module may create acoustic embeddings in the same subspace as the phoneme embeddings, **X,** and it can be formulated as:

$$E_1 = Dropout(ReLU(C'W_1 + b_1))$$

$$E_a = Dropout(ReLU(E_1 W_2 + b_2))$$

where $C' = Reshape\left(C, (Lg, \frac{C_c T'}{Lg})\right)$, $W_1 \in \mathbb{R}^{\frac{C_c T'}{Lg} \times d_{in}}$ and $W_2 \in \mathbb{R}^{d_{in} \times d}$ are weight matrices; $b_1 \in \mathbb{R}^{d_{in}}$

and $b_2 \in \mathbb{R}^d$ are the bias vectors; and $d_{in}$ is an intermediate dimension.

Positional encoding, **PE,** may then be added to the sequence of phoneme and acoustic embeddings generated, **X** and $E_a$, in order to incorporate order information. Each position in the sequence is associated with a pair of values: one representing the sine function of a certain frequency and the other representing the cosine function of the same frequency. This may be formulated as:

$$PE(pos, 2i) = \sin\left(\frac{pos}{10000^{2i/d}}\right)$$

$$PE(pos, 2i + 1) = \cos\left(\frac{pos}{10000^{2i/d}}\right)$$

where $PE \in \mathbb{R}^{Lg \times d}$, *Lg* is the sequence length and *d* is the embedding dimension; *pos* is the time step index; and *2i* and *2i* + 1 are the channel indexes, with *i* up to $\frac{d}{2} - 1$.

The combined embedding will then be $Z_t = Y_t + \alpha PE_t$ where $Y_t$ is the embedding and $\alpha$ is a learnable parameter.

Subsequently, a transformer encoder unit may be used to model frame relationships and long-term dependencies between the ordered set of phoneme embeddings, **X,** directly, outputting a context-aware encoded representation of them:

$$E_p = model(X)$$

It may involve the following layers:

- A multi-head self-attention mechanism with a typically 8 attention heads, each with its own linear projection layer:

$$Z_1 = MultiHead(Q, K, V) = Concat(head_1, \ldots, head_h)W^0 \in \mathbb{R}^{Lg \times d}$$

$$head_i = Attention(Q_i, K_i, V_i)$$

$$Attention\,(Q, K, V) = softmax(\frac{QK^T}{\sqrt{d_k}})V$$

where $Q = XW^Q$ is the query matrix that represents the current token for which the attention score is to be computed; $K = XW^K$ is the key matrix which represents the tokens being compared against the query to compute the attention scores; $V = XW^V$ is the value matrix that represents the actual values that will be weight by the attention scores to produce the output; $W^Q$, $W^K$ and $W^V \in \mathbb{R}^{d \times d_k}$ are learnable weight matrices. $W^0 \in \mathbb{R}^{d \times d}$ is the output weight matrix; $d_k = d/h$, with h the number of heads, is the dimension of the key vectors; *Concat* means concatenation; and

$$softmax(z_i) = \frac{e^{z_i}}{\sum_{j=1}^n e^{z_j}}.$$

- A feedforward neural network with 2 linear transformation layers and a ReLU activation in between:

$$Z_2 = FFN(Z_1') = ReLU(Z_1'W_1 + b_1)W_2 + b_2 \in \mathbb{R}^{Lg \times d}$$

where $W_1 \in \mathbb{R}^{d \times d_{ff}}$ and $W_2 \in \mathbb{R}^{d_{ff} \times d}$ are weight matrices; $b_1 \in \mathbb{R}^{d_{ff}}$ and $b_2 \in \mathbb{R}^d$ are bias vectors; and $d_{ff}$ is the dimensionality of the intermediate layer, typically larger than $d$. Here, matrices and vectors are added, meaning the bias vectors are broadcast across each row of the matrix they are being added to.
- Residual connections and layer normalization around each sub-layer, which may be computed as:

$$Z_1' = LayerNorm(X + Z_1)$$

$$E_p = Z_2' = LayerNorm(Z_1 + Z_2)$$

where $LayerNorm(x) = \frac{x - \mu}{\sigma} \odot \gamma + \beta$, with $\mu$ the mean of x, $\sigma$ the standard variance of x, $\gamma$ and $\beta$ learnable parameters.

In its turn, a transformer decoder unit may include attention mechanisms to better integrate context vectors and improve prosody in the synthesized speech, outputting the context-aware combine representations:

$$\boldsymbol{D} = model(E_p, E_a)$$

It consists of similar layers to the transformer encoder unit:

- A masked multi-head self-attention mechanism with typically 8 attention heads, each with its own linear projection layer:

$$Z_1 = MaskedHead(Q, K, V) = Concat(head_1, \dots, head_h)W^0 \in \mathbb{R}^{Lg \times d}$$

$$head_i = Attention(Q_i, K_i, V_i)$$

$$Attention\ (Q, K, V) = softmax(\frac{QK^T}{\sqrt{d_k}} + Mk)V$$

where $Q = E_a W^Q$, $K = E_a W^K$, $V = E_a W^V$; $Mk$ is the mask matrix, which is used to prevent attention to future positions, containing zeros in the upper triangular part and negative infinity in the lower triangular part.
- A multi-head self-attention mechanism over the transformer encoder unit output (phoneme embeddings, $X$), each with a linear projection:

$$Z_2 = MultiHead(Q', K', V')$$

where $Q' = Z_1' W'^Q$, $K' = E_p W'^K$ and $V' = E_p W'^V$.

- A feed-forward neural network with 2 linear transformations with ReLU activation in between:

$$Z_3 = FFN(Z_2')$$

- Residual connections and layer normalization around each sub-layer (masked self-attention, encoder attention and feed-forward):

$$Z_1' = LayerNorm(X + Z_1)$$

$$Z_2' = LayerNorm(Z_1 + Z_2)$$

$$D = Z_3' = LayerNorm(Z_2 + Z_3)$$

The context-aware representations, **D,** may then be converted into mel-spectrogram frames, **M,** using a Mel Linear and Stop Linear unit. The mel-linear layer projects the context-aware representations **D,** to the mel-spectrogram dimension:

$$M = DW_{mel} + b_{mel} \in \mathbb{R}^{Lg \times d_{mel}}$$

where $W_{mel} \in \mathbb{R}^{d \times d_{mel}}$ is the weight matrix, $b_{mel} \in \mathbb{R}^{d_{mel}}$ is the bias vector, $Lg$ is the sequence length and $d_{mel}$ is the dimension of the mel-spectrogram. The Stop linear layer predicts whether each frame is the end of the sequence (stop token): $s = DW_{stop} + {} + b_{stop} \in \mathbb{R}^{L}$, where $W_{stop} \in \mathbb{R}^{d \times 1}$ and $b_{stop} \in \mathbb{R}$.

A Post-net unit (7) may be used to convert mel-spectrogram frames, **M,** into a refined linear spectrogram, **L**$_{refined}$. It may include a CBHG module, that aggregates in a single module, Convolutional Banks, Highway Networks and Gated Recurrent Units, to generate a linear spectrogram, **L,** a CNN module configured to refine said linear spectrograms, **L,** and a residual connection adapted to add the output of both modules, thereby generating the refined linear spectrogram, **L**$_{refined}$.

More particularly, the CBHG module comprises:

- Convolutional layers with batch normalization **Y**$_{conv}$, wherein,

$$Y_{conv} = MaxPool(Concat(Y_1, ..., Y_k))$$

$$Y_k = BatchNorm\left(Conv(M)\right)$$

where $k$ = 1, 2, ..., $K$ are filter widths, and max pooling is performed along the time dimension to increase local invariance, typically with a stride of 1.

- a convolutional highway network, **H,** wherein,

$$H = T \odot ReLU(W_H Y_{conv} + b_H) + C \odot Y_{conv}$$

where $T = \sigma(W_T Y_{conv} + b_T)$, $C$ = 1 - $T$; $W_T$, $W_H \in \mathbb{R}^{F \times F}$ are weight matrices; $b_T$, $b_H \in \mathbb{R}^{F}$ are bias vectors; and $F$ is the number of filters.

- a bidirectional gated recurrent unit, **GRU,** wherein,

$$h_f[t] = GRU(H[t], h_f[t-1])$$

$$h_b[t] = GRU(H[T - t - 1], h_b[t - 1])$$

$$L = Concat(h_f, h_b)$$

The CNN module may consist of 5 convolutional layers with batch normalization and tanh activations on all but the final layers:

$L_1 = tanh(BatchNorm(Conv1(L))$
$L_2 = tanh(BatchNorm(Conv2(L_1))$
$L_3 = tanh(BatchNorm(Conv3(L_2))$
$L_4 = tanh(BatchNorm(Conv4(L_3))$
$L_5 = tanh(BatchNorm(Conv5(L_4))),$

where $\tanh(Y) = \frac{e^Y - e^{-Y}}{e^Y + e^{-Y}}$ , and wherein,

$$L_{refined} = L + L_5$$

Finally, a reconstruction audio signal unit may be used to convert the refined linear spectrogram $L_{refined}$, into a speech waveform, $W$.

More particularly, a Griffin-Lim algorithm may be executed to convert the generated linear spectrogram into a speech waveform, reconstructing the time-domain signal. Given a linear spectrogram, $L_{refined}$, the goal is to find the corresponding phase $\phi$ such that the inverse short-time Fourier transform (ISTFT) of the complex spectrogram, $Le^{i\phi}$, closely matches the original signal. The ISTFT is a mathematical process that converts a spectrogram (frequency domain) back into a time-domain signal, effectively reconstructing the audio waveform from its spectral components. The Griffin-Lim algorithm is an iterative process, which begins with an initial phase estimate, either random or zero. Using this phase and the given linear spectrogram, it computes the ISTFT to obtain a time-domain signal. This signal is then transformed back into the frequency domain using the short-time Fourier transform (STFT), resulting in a new complex spectrogram. The phase is updated by retaining the phase of the new spectrogram, while the magnitude from the original linear spectrogram remains unchanged. This process continues, progressively refining the phase estimate until the reconstructed spectrogram closely matches the original, generating a high-quality time-domain signal.

## DESCRIPTION OF FIGURES

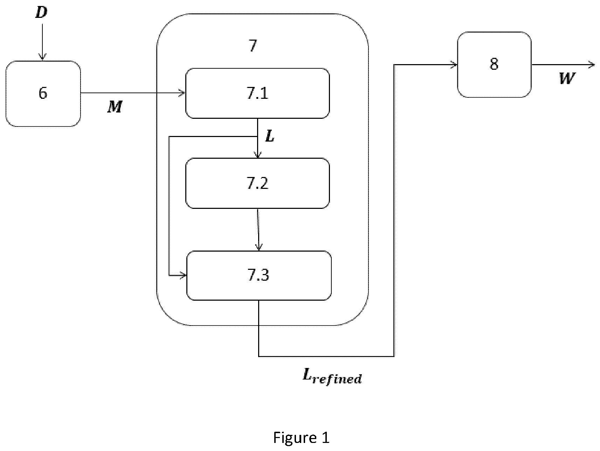

Figure 1- representation of a preferred embodiment of the transformer-based text-to-speech system for neural speech synthesis described in the present application.
The reference signs represent:

> $D$ - context-aware combined representations;
> 6 - Mel Linear and Stop Linear unit;
> $M$ - mel-spectrogram frames;
> 7 - Post-net unit;
> 7.1 - CBHG module;
> $L$ - Linear spectrogram;
> 7.2 - CNN module;
> 7.3 - residual connection;
> $L_{refined}$ - refined linear spectrogram;
> 8 - reconstruction audio signal unit;
> $W$ - speech waveform.

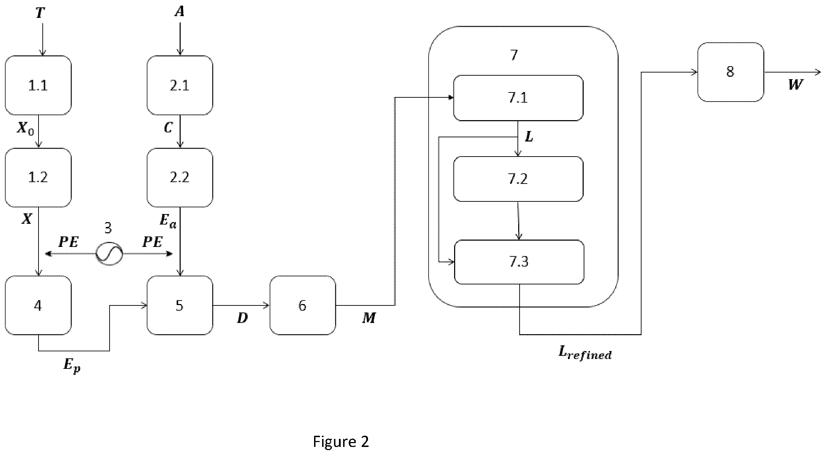

Figure 2 - representation of a second embodiment of the transformer-based text-to-speech system for neural speech synthesis described in the present application. The reference signs represent:

> $T$ - text prompt input;

1.1 - grapheme-to-phoneme conversion sub-module;
$X_0$ - phoneme sequence;
1.2 - encoder pre-net sub-module;
$X$ - phoneme embeddings;
$A$ - audio prompt input;
2.1 - convolutional encoder-decoder sub-module;
$C$ - compressed acoustic features;
2.2 - decoder pre-net sub-module;
$E_a$ - acoustic embeddings;
3 - positional encoding unit;
$PE$ - positional encoding;
4 - transformer encoder unit;
$E_p$ - context-aware phoneme embeddings;
5 - transformer decoder unit;
$D$ - context-aware combined representations;
6 - Mel Linear and Stop Linear unit;
$M$ - mel-spectrogram frames;
7 - Post-net unit;
7.1 - CBHG module;
$L$ - Linear spectrogram;
7.2 - CNN module;
7.3 - residual connection;
$L_{refined}$ - refined linear spectrogram;
8 - reconstruction audio signal unit;
$W$ - speech waveform.

## EMBODIMENTS

In a preferred embodiment of the transformer-based text-to-speech system for neural speech synthesis, described in the present application, it is comprised by:

A context-aware representation unit, configured to, upon receiving at least a text input, $T$, generate context-aware representations, $D$, based on at least an ordered sequence of context-aware phoneme embeddings $E_p$;
A Mel Linear and Stop Linear unit (6), comprising a mel linear layer configured to convert the context-aware combined representations, $D$, into mel-spectrogram frames, $M$, and a stop linear layer configured to predict whether each frame is the end of the sequence;
A Post-net unit (7) configured to convert mel-spectrogram frames, $M$, into a refined linear spectrogram, $L_{refined}$; and
A reconstruction audio signal unit (8) configured to convert the refined linear spectrogram $L_{refined}$, into a speech waveform, $W$.

More particularly, the Post-net unit (7) includes a CBHG module (7.1) configured to generate linear spectrograms, $L$, a CNN module (7.2) configured to refine said linear spectrograms, $L$, and a residual connection (7.3) adapted to add the output of both modules (7.1, 7.2), thereby generating the refined linear spectrogram, $L_{refined}$. Said CBHG module (7.1) comprises:

- convolutional layers with batch normalization, $Y_{conv}$, wherein,

$$Y_{conv} = MaxPool(Concat(Y_1, \ldots, Y_k))$$

$$Y_k = BatchNorm\left(Conv(M)\right)$$

where
$k = 1, 2, \ldots, K$ are filter widths, and max pooling is performed along the time dimension;
- a convolutional highway network, $H$, wherein,

$$H = T \odot ReLU(W_H Y_{conv} + b_H) + C \odot Y_{conv}$$

where $T = \sigma(W_T Y_{conv} + b_T)$, $C = 1 - T$; $W_T$, $W_H \in \mathbb{R}^{F \times F}$ are weight matrices; $b_T, b_H \in \mathbb{R}^F$ are bias vectors; and $F$ is the number of filters;

- a bidirectional gated recurrent unit, **GRU,** wherein,

$$h_f[t] = GRU(H[t], h_f[t-1])$$

$$h_b[t] = GRU(H[T - t - 1], h_b[t-1])$$

$$L = Concat(h_f, h_b)$$

By having a modified Post-net unit (7) compared to a Post-net unit of a conventional TSS transformer architecture, in order to include a CBHG module, that generates a linear spectrogram, **L,** followed by convolutional layers for refinement, **$L_{refined}$,** the system is able to enhance speech naturalness by capturing long-term dependencies and establishing context across sequential frames of the mel-spectrogram, which improves the quality of the synthesized speech, **W.**

In one embodiment of the system, the CNN module (7.2) of the Post-net unit (7) comprises five convolutional layers with batch normalization and tanh activations on all but the final layers:

$L_1$ = tanh(BatchNorm(Conv1(L))
$L_2$ = tanh(BatchNorm(Conv2($L_1$))
$L_3$ = tanh(BatchNorm(Conv3($L_2$))
$L_4$ = tanh(BatchNorm(Conv4($L_3$))
$L_5$ = tanh(BatchNorm(Conv5($L_4$)),

where

$$\tanh(Y) = \frac{e^Y - e^{-Y}}{e^Y + e^{-Y}},$$

and wherein,

$$L_{refined} = L + L_5$$

In one embodiment of the system, the reconstruction audio signal unit (8) is programmed to execute a Griffin-Lim algorithm in order to convert the refined linear spectrogram **$L_{refined}$,** into a speech waveform, **W.**

In one embodiment of the system, the mel linear layer of Mel Linear and Stop Linear unit (6) is configured to project the context-aware representations, **D,** to the mel-spectrogram, **M,** dimension,

$$M = DW_{mel} + b_{mel} \in \mathbb{R}^{Lg \times d_{mel}}$$

where

$W_{mel} \in \mathbb{R}^{d \times d_{mel}}$ is the weight matrix, $b_{mel} \in \mathbb{R}^{d_{mel}}$ is the bias vector, $Lg$ is the sequence length and $d_{mel}$ is the dimension of the mel-spectrogram.

In one embodiment of the system, the context-aware representation unit, comprises:

an input unit, comprising a text-input module and an audio-input module, wherein, the text-input module includes:

- a grapheme-to-phoneme conversion sub-module (1.1), configured to convert a text input, **T,** into a sequence of phonemes, **$X_0$**; and
- an encoder pre-net sub-module (1.2), configured to process phoneme sequences, **$X_0$**, in order to extract longer-term context, thereby generating phoneme embeddings, **X;**

and the audio-input module includes:

- a convolutional encoder-decoder sub-module (2.1), configured to process a raw voice signal, **A,** in order to encode said voice signal, **A,** into compressed acoustic features, **C,** using neural-based compression techniques;

- a decoder pre-net sub-module (2.2), configured to process compressed acoustic features, **C,** thereby generating a set of acoustic embeddings, $E_a$;

A positional encoding unit (3), configured to add positional encoding, **PE,** to the set of phoneme embeddings, **X,** and to the set of acoustic embeddings, $E_a$, thereby generating ordered sequences of embeddings;

A transformer encoder unit (4), configured to process the ordered sequence of phoneme embeddings, **X,** to extract context-aware encoded representations, thereby generating a set of context-aware phoneme embeddings, $E_p$;

A transformer decoder unit (5), configured to generate context-aware combined representations, **D,** based on the ordered sequence of embeddings $E_p$ and $E_a$.

By including a convolutional encoder-decoder sub-module (2.1) to generate compressed acoustic representations, **C,** instead of a mel-spectrogram of the original audio, **A,** the system allows to achieve an improved performance in what concerns the quality of the synthesized speech, **W,** since more precise representation of the voice signal to be cloned is captured.

In one embodiment of the system, the convolutional encoder-decoder sub-module (2.1) of the audio-input module, is a pre-trained model configured to extract acoustic features from the raw voice signal, $A \in \mathbb{R}^{C_a \times T}$, where $C_a$ is the number of audio channels, and $T = df_{sr}$ is the number of audio samples for a given sample rate $f_{sr}$, and d is the embedding dimension. More particularly, the convolutional encoder-decoder sub-module (2.1) may comprise:

an encoder unit comprising a plurality of convolutional layers and a long short-term memory network unit, both units being operatively configured to extract essential acoustic features from the raw voice signal, **A,** and to generate latent representations of **A**;

a Residual Vector Quantization unit configured to hierarchically compress said latent representations generated by the encoder unit, thereby generating compressed acoustic features, **C.**

In one embodiment of the system, the grapheme-to-phoneme conversion sub-module (1.1) of the text-input module, is configured to generate the sequence of phonemes, $X_0$, using predefined linguistic rules and models.

In one embodiment of the system, the encoder pre-net sub-module (1.2) of the text-input module, comprises a 3-layer Convolutional Neural Network (CNN); the CNN network comprising the following network characteristics: batch normalization, ReLU activation function, and a dropout layer after each convolutional layer; preferably the dropout rate is 0.5.

In one embodiment of the system, the decoder pre-net sub-module (2.2) of the audio-input module comprises a neural network comprised of two fully connected layers with ReLU activation, and a dropout layer after each fully connected layer; and wherein the dropout rate is 0.5.

In one embodiment of the system, the positional encoding unit (3) is configured to add positional encoding, **PE,** wherein each position in a sequence of embeddings is associated with a pair of values:

one value representing the sine function of a predefined frequency, and the other value representing the cosine function of said predefined frequency, such that:

$$PE(pos, 2i) = \sin\left(\frac{pos}{10000^{2i/d}}\right)$$

$$PE(pos, 2i + 1) = \cos\left(\frac{pos}{10000^{2i/d}}\right)$$

where $PE \in \mathbb{R}^{Lg \times d}$, $Lg$ is the sequence length and d is the embedding dimension; *pos* is the time step index; and $2i$ and $2i + 1$ are the channel indexes, with $i$ up to $\frac{d}{2} - 1$.

In one embodiment of the system, the transformer encoder unit (4) comprises the following layers:

- a multi-head self-attention mechanism comprised of a plurality of attention heads, each head having its own linear projection layers;
- a Feed-Forward Neural Network comprising at least a plurality of linear transformation layers;
- a plurality of residual connections and layer normalization around each layer of the multi-head self-attention mechanism and of the Feed-Forward Neural Network.

More particularly, the Feed-Forward Neural Network of the transformer encoder unit (4) may comprise:

- two linear transformation layers; and
- a ReLU activation layer in between the two linear transformation layers.

In one embodiment of the system, the transformer decoder unit (5) comprises the following layers:

- a masked multi-head self-attention mechanism to process the ordered sequence of acoustic embeddings, $E_a$; the mechanism comprising a plurality of attention heads, each head having its own linear projection layers;
- a multi-head self-attention mechanism to process the ordered sequence of context-aware phoneme embeddings, $E_p$; the mechanism comprising a plurality of attention heads, each head having its own linear projection layers;
- a Feed-Forward Neural Network comprising at least a plurality of linear transformation layers;
- a plurality of residual connections and layer normalization around each of said layers, that is, masked multi-head self-attention and multi-head self-attention mechanisms and Feed-Forward Neural Network.

More particularly, the Feed-Forward Neural Network of the transformer decoder unit (5) may comprise:

- two linear transformation layers;
- a ReLU activation layer in between the two linear transformation layers.

Of course, the preferred embodiments shown above are combinable, in the different possible forms, being herein avoided the repetition all such combinations.

**Claims**

1. A transformer-based text-to-speech system for neural speech synthesis comprising:

   A context-aware representation unit, configured to, upon receiving at least a text input, *T,* generate context-aware representations, *D,* based on at least an ordered sequence of context-aware phoneme embeddings $E_p$;
   A Mel Linear and Stop Linear unit (6), comprising a mel linear layer configured to convert the context-aware combined representations, *D,* into mel-spectrogram frames, *M,* and a stop linear layer configured to predict whether each frame is the end of the sequence;
   A Post-net unit (7) configured to convert mel-spectrogram frames, *M,* into a refined linear spectrogram, $L_{refined}$; and
   A reconstruction audio signal unit (8) configured to convert the refined linear spectrogram $L_{refined}$ into a speech waveform, *W.* the system being **characterized in that,**
   the Post-net unit (7) comprises a CBHG module (7.1) configured to generate linear spectrograms, *L,* a CNN module (7.2) configured to refine said linear spectrograms, *L,* and a residual connection (7.3) adapted to add the output of both modules (7.1, 7.2), thereby generating the refined linear spectrogram, $L_{refined}$. and **in that,**
   the CBHG module (7.1) of the Post-net unit (7) comprises:

   - convolutional layers with batch normalization, $Y_{conv}$, wherein,

$$Y_{conv} = MaxPool(Concat(Y_1, \dots, Y_k))$$

$$Y_k = BatchNorm\left(Conv(M)\right)$$

   where
   $k$ = 1, 2, ..., $K$ are filter widths, and max pooling is performed along the time dimension;
   - a convolutional highway network, *H,* wherein,

$$H = T \odot ReLU(W_H Y_{conv} + b_H) + C \odot Y_{conv}$$

   where $T = \sigma(W_T Y_{conv} + b_T)$, $C = 1 - T$; $W_T, W_H \in \mathbb{R}^{F \times F}$ are weight matrices; $b_T, b_H \in \mathbb{R}^F$ are bias

vectors; and F is the number of filters;
- a bidirectional gated recurrent unit, **GRU,** wherein,

$$h_f[t] = GRU(H[t], h_f[t-1])$$

$$h_b[t] = GRU(H[T-t-1], h_b[t-1])$$

$$L = Concat(h_f, h_b)$$

2. The system according to claim 1, wherein the CNN module (7.2) of the Post-net unit (7) comprises five convolutional layers with batch normalization and tanh activations on all but the final layers:

$L_1$ = tanh(BatchNorm(Conv1(L)))
$L_2$ = tanh(BatchNorm(Conv2($L_1$)))
$L_3$ = tanh(BatchNorm(Conv3($L_2$)))
$L_4$ = tanh(BatchNorm(Conv4($L_3$)))
$L_5$ = tanh(BatchNorm(Conv5($L_4$))),

where

$$\tanh(Y) = \frac{e^Y - e^{-Y}}{e^Y + e^{-Y}},$$

and wherein,

$$L_{refined} = L + L_5$$

3. The system according to any of the preceding claims, wherein the reconstruction audio signal unit (8) is programmed to execute a Griffin-Lim algorithm in order to convert the refined linear spectrogram **$L_{refined}$,** into a speech waveform, **W.**

4. The system according to any of the preceding claims, wherein the mel linear layer of Mel Linear and Stop Linear unit (6) is configured to project the context-aware representations, **D,** to the mel-spectrogram, **M,** dimension,

$$M = DW_{mel} + b_{mel} \in \mathbb{R}^{Lg \times d_{mel}}$$

where $W_{mel} \in \mathbb{R}^{d \times d_{mel}}$ is the weight matrix, $b_{mel} \in \mathbb{R}^{d_{mel}}$ is the bias vector, *Lg* is the sequence length and $d_{mel}$ is the dimension of the mel-spectrogram.

5. The system according to any of the previous claims, wherein, the context-aware representation unit, comprises:

an input unit, comprising a text-input module and an audio-input module, wherein, the text-input module includes:

- a grapheme-to-phoneme conversion sub-module (1.1), configured to convert a text input, **T,** into a sequence of phonemes, **$X_0$**; and
- an encoder pre-net sub-module (1.2), configured to process phoneme sequences, **$X_0$**, in order to extract longer-term context, thereby generating phoneme embeddings, **X;**

and the audio-input module includes:

- a convolutional encoder-decoder sub-module (2.1), configured to process a raw voice signal, **A,** in order to encode said voice signal, **A,** into compressed acoustic features, **C,** using neural-based compression techniques;

- a decoder pre-net sub-module (2.2), configured to process compressed acoustic features, **C,** thereby generating a set of acoustic embeddings, $E_a$;

A positional encoding unit (3), configured to add positional encoding, **PE,** to the set of phoneme embeddings, **X,** and to the set of acoustic embeddings, $E_a$, thereby generating ordered sequences of embeddings;

A transformer encoder unit (4), configured to process the ordered sequence of phoneme embeddings, **X,** to extract context-aware encoded representations, thereby generating a set of context-aware phoneme embeddings, $E_p$;

A transformer decoder unit (5), configured to generate context-aware combined representations, **D,** based on the ordered sequence of embeddings $E_p$ and $E_a$.

6. The system according to claim 5, wherein the grapheme-to-phoneme conversion sub-module (1.1) of the text-input module, is configured to generate the sequence of phonemes, $X_0$, using predefined linguistic rules and models.

7. The system according to claim 5 or 6, wherein the encoder pre-net sub-module (1.2) of the text-input module, comprises a 3-layer Convolutional Neural Network (CNN); the CNN network comprising the following network characteristics: batch normalization, ReLU activation function, and a dropout layer after each convolutional layer; preferably the dropout rate is 0.5.

8. The system according to any of the preceding claims 5 to 7, wherein the convolutional encoder-decoder sub-module (2.1) of the audio-input module, is a pre-trained model configured to extract acoustic features from the raw voice signal, $A \in \mathbb{R}^{C_a \times T}$, where $C_a$ is the number of audio channels, and $T = d f_{sr}$ is the number of audio samples for a given sample rate $f_{sr}$, and d is the embedding dimension.

9. The system according to any of the preceding claims 5 to 8, wherein the convolutional encoder-decoder sub-module (2.1) comprises:

an encoder unit comprising a plurality of convolutional layers and a long short-term memory network unit, both units being operatively configured to extract essential acoustic features from the raw voice signal, **A,** and to generate latent representations of **A**;

a Residual Vector Quantization unit configured to hierarchically compress said latent representations generated by the encoder unit, thereby generating compressed acoustic features, **C.**

10. The system according to any of the preceding claims 5 to 9, wherein the decoder pre-net sub-module (2.2) of the audio-input module comprises a neural network comprised of two fully connected layers with ReLU activation, and a dropout layer after each fully connected layer; and wherein the dropout rate is 0.5.

11. The system according to any of the preceding claims 5 to 10, wherein the positional encoding unit (3) is configured to add positional encoding, **PE,** wherein each position in a sequence of embeddings is associated with a pair of values: one value representing the sine function of a predefined frequency, and the other value representing the cosine function of said predefined frequency, such that:

$$PE(pos, 2i) = \sin\left(\frac{pos}{10000^{2i/d}}\right)$$

$$PE(pos, 2i+1) = \cos\left(\frac{pos}{10000^{2i/d}}\right)$$

where

$PE \in \mathbb{R}^{Lg \times d}$, $Lg$ is the sequence length and d is the embedding dimension; *pos* is the time step index; and 2*i* and 2*i* + 1 are the channel indexes, with *i* up to $\frac{d}{2} - 1$.

12. The system according to any of the preceding claims 5 to 11, wherein the transformer encoder unit (4) comprises the following layers:

- a multi-head self-attention mechanism comprised of a plurality of attention heads, each head having its own linear projection layers;
- a Feed-Forward Neural Network comprising at least a plurality of linear transformation layers;
- a plurality of residual connections and layer normalization around each layer of the multi-head self-attention mechanism and of the Feed-Forward Neural Network.

13. The system according to claim 12, wherein, the Feed-Forward Neural Network of the transformer encoder unit (4) comprises:

- two linear transformation layers; and
- a ReLU activation layer in between the two linear transformation layers.

14. The system according to any of the preceding claims 5 to 13, wherein the transformer decoder unit (5) comprises the following layers:

- a masked multi-head self-attention mechanism to process the ordered sequence of acoustic embeddings, $E_a$; the mechanism comprising a plurality of attention heads, each head having its own linear projection layers;
- a multi-head self-attention mechanism to process the ordered sequence of context-aware phoneme embeddings, $E_p$; the mechanism comprising a plurality of attention heads, each head having its own linear projection layers;
- a Feed-Forward Neural Network comprising at least a plurality of linear transformation layers;
- a plurality of residual connections and layer normalization around each of said layers, that is, masked multi-head self-attention and multi-head self-attention mechanisms and Feed-Forward Neural Network.

15. The system according to claim 14, wherein the Feed-Forward Neural Network of the transformer decoder unit (5) comprises:

- two linear transformation layers;
- a ReLU activation layer in between the two linear transformation layers.

Figure 1

Figure 2

EP 4 723 100 A1

## EUROPEAN SEARCH REPORT

**Application Number**

EP 24 20 5053

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | XU TAN ET AL: "A Survey on Neural Speech Synthesis", ARXIV.ORG, CORNELL UNIVERSITY LIBRARY, 201 OLIN LIBRARY CORNELL UNIVERSITY ITHACA, NY 14853, 30 June 2021 (2021-06-30), XP081996243, * abstract * * paragraph 2.2 * * paragraph 2.3 * * paragraph 2.4 * * paragraph 3.4 * | 1-15 | INV. G10L13/047 G06N3/045 |
| A | CN 113 205 792 A (UNIV INNER MONGOLIA TECHNOLOGY) 3 August 2021 (2021-08-03) * paragraph [0017] - paragraph [0078] * | 1-15 | |

TECHNICAL FIELDS SEARCHED (IPC)

G10L
G06N

The present search report has been drawn up for all claims

| Place of search | Date of completion of the search | Examiner |
|---|---|---|
| The Hague | 10 February 2025 | De Ceulaer, Bart |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

17

## ANNEX TO THE EUROPEAN SEARCH REPORT
## ON EUROPEAN PATENT APPLICATION NO.

EP 24 20 5053

This annex lists the patent family members relating to the patent documents cited in the above-mentioned European search report.
The members are as contained in the European Patent Office EDP file on
The European Patent Office is in no way liable for these particulars which are merely given for the purpose of information.

10-02-2025

| Patent document cited in search report | Publication date | Patent family member(s) | Publication date |
|---|---|---|---|
| CN 113205792 A | 03-08-2021 | NONE | |

EPO FORM P0459

For more details about this annex : see Official Journal of the European Patent Office, No. 12/82